Europäisches Patentamt

European Patent Office

Office européen des brevets

(19)

(11) **EP 1 110 456 B1**

(12) **FASCICULE DE BREVET EUROPEEN**

(45) Date de publication et mention
de la délivrance du brevet:
**05.11.2003 Bulletin 2003/45**

(51) Int Cl.⁷: **A01N 57/20**
// (A01N57/20, 49:00, 43:90,
31:06, 27:00)

(21) Numéro de dépôt: **00403509.3**

(22) Date de dépôt: **13.12.2000**

(54) **Composition herbicide comprenant une substance allélopathique et son procédé d'utilisation**

Eine allelopathische Substanz enthaltende herbizide Zusammensetzung und Verfahren zu ihrer
Verwendung

Herbicidal composition comprising an allelopathic substance and method of use thereof

(84) Etats contractants désignés:
**AT BE CH CY DE DK ES FI FR GB GR IE IT LI LU
MC NL PT SE TR**

(30) Priorité: **13.12.1999 FR 9915675**

(43) Date de publication de la demande:
**27.06.2001 Bulletin 2001/26**

(73) Titulaire: **CALLIOPE
64150 Nogueres (FR)**

(72) Inventeur: **Guillon, Michel
64000 Pau (FR)**

(74) Mandataire: **Kédinger, Jean-Paul et al
Cabinet Malemont
42, avenue du Président Wilson
75116 Paris (FR)**

(56) Documents cités:
**WO-A-97/16975        WO-A-98/31223**

**Description**

La présente invention a pour objet un produit et un procédé de destruction des germes de mauvaises herbes, présents dans le sol ; elle a également pour objet un procédé de lutte contre les mauvaises herbes présentes sur un site et contre les germes de mauvaises plantes, présents dans le sol de ce site.

Dans le domaine de la destruction des mauvaises herbes, l'utilisation généralisée d'herbicides chimiques n'est pas sans poser problème ; c'est ainsi que les autorités de plusieurs pays se sont récemment émues devant le niveau de pollution des nappes phréatiques engendré par certains herbicides dits "résiduaires" de la famille des triazines (atrazine, simazine...) et des urées substituées (diuron, etc...), ce qui a conduit à l'interdiction d'utilisation (atrazine dans de nombreux pays) ou à leur limitation d'emploi (dose maximum autorisée sur certaines cultures) dans la plupart des pays européens.

Ces herbicides à effet résiduaire, c'est-à-dire qui conservent leur activité dans le sol, sont cependant intéressants en ce sens qu'ils complètent efficacement l'activité de contact par exemple des produits couramment employés en arboriculture et viticulture car leur activité anti-germinative assure un désherbage efficace sur plusieurs mois.

De nouvelles molécules moins polluantes ont été découvertes depuis, mais leur coût est très élevé, ce qui limite leur utilisation.

On connaît par ailleurs, des molécules chimiques herbicides, en particulier celles de la famille des aminophosphonates, qui sont des produits systémiques absorbés par les feuilles et véhiculés par la sève au niveau des rhizomes et des racines et qui agissent par blocage de la biosynthèse de certains acides aminés essentiels ou par inhibition de la photosynthèse.

Ces herbicides sont cependant inactivés au contact du sol et ne présentent donc aucune activité herbicide résiduaire, et de ce fait, pour obtenir un désherbage durable, il est nécessaire de les associer avec des molécules à longue persistance d'action dans le sol telles que les triazines et les urées substituées évoquées ci-dessus.

Enfin, WO-A-98 31223 décrit l'utilisation d'une composition constituée d'un mélange (i) d'au moins un ester d'acide gras ou d'acide gras alkoxylé et (ii) d'au moins un dérivé terpénique, en tant qu'adjuvant améliorant l'efficacité d'une substance active phytosanitaire, notamment un herbicide.

Le but de la présente invention est la mise au point de compositions herbicides qui s'affranchissent totalement de l'utilisation d'herbicides à effet résiduaire polluants mais dont l'utilisation permet néanmoins un désherbage efficace sur une longue période de temps.

Ainsi, il est proposé selon l'invention, un produit et un procédé de destruction des germes de mauvaises plantes, présents dans le sol, ce produit et ce procédé étant conformes aux revendications 1 et 2, le monoterpène ayant une activité allélopathique anti-germinative.

On rappellera ici que les phénomènes d'allélopathie sont relativement bien décrits dans la littérature spécialisée ; ils concernent toutes les interactions biochimiques dans le milieu végétal et résultent de l'activité de divers composés synthétisés par les plantes elles-mêmes ou par des micro-organismes dans le sol.

Plus précisément, l'allélopathie s'analyse comme étant l'effet d'inhibition du développement d'une espèce végétale par une autre espèce vivant dans le même milieu, notamment au moyen de sécrétions radiculaires, c'est-à-dire de substances dites allélopathiques.

La liste des produits biochimiques à activité allélopathique s'étend continuellement et elle est actuellement estimée à plusieurs milliers de composés. Certains ont servi de modèles structurels pour la conception de molécules herbicides tels que les dérivés d'acide benzoïque, de nombreux terpènes ont été identifiés (par exemple le géraniol) comme inhibiteur de croissance, parmi les extraits de plantes et le modèle le plus couramment cité est le Juglone, principe actif des excrétions radiculaires du noyer (*Juglans regia*) dont l'activité herbicide par inhibition de la germination des semences de mauvaises herbes a été décrite.

Ainsi, le produit selon l'invention agit par production d'un effet herbicide dans le sol par le ou les monoterpène (s) à activité allélopathique et non désactivé(s) dans le sol.

On ajoutera que s'agissant de substances naturelles, lesdits monoterpènes sont peu ou non polluants ; de plus, ils ne présentent aucun risque d'accumulation dans l'environnement en raison de leur caractère relativement volatil.

Par conséquent, le nouveau produit proposé tout en procurant des effets herbicides intéressants, comparables à ceux des herbicides chimiques à effet résiduaire, est exempt des inconvénients de ces deniers, c'est-à-dire du caractère polluant inhérent à ces herbicides chimiques.

Le monoterpène à utiliser selon l'invention est choisi dans le groupe constitué par le β-pinène, le géraniol, le citral, le cinéole, le linalool et le menthol, une préférence toute particulière étant donnée au cinéole.

La présente invention a en outre pour objet un procédé de lutte contre les mauvaises herbes présentes sur un site et les germes de mauvaises plantes, présents dans le sol de ce site, ce procédé étant conforme à la revendication 3.

L'herbicide chimique mis en oeuvre selon l'invention, est de préférence choisi dans la famille des aminophosphonates et notamment parmi les suivants : l'acide 2-amino 4-(hydroxyméthylphosphinyl) butanoïque, le sel d'ammonium de cet acide, la N-(phosphonométhyl) glycine et les sels d'amine, de métal alcalin, d'ammonium et de triméthylsulfonium de la N-(phosphonométhyl) glycine.

Selon un mode de réalisation préféré dudit procédé de lutte, celui-ci met en oeuvre du cinéole et le sel d'ammonium de l'acide 2-amino 4-(hydroxyméthylphosphinyl) butanoïque (glufosinate) et/ou le sel d'isopropylamine de la N-(phosphonométhyl) glycine (glyphosate).

Par ailleurs, dans ce procédé de lutte, l'herbicide chimique est utilisé conjointement avec un véhicule comprenant au moins un agent tensioactif anionique et au moins un agent tensioactif non ionique.

L'agent tensioactif anionique peut être choisi parmi les sels (notamment de métal alcalin, de métal alcalino-terreux, d'ammonium ou de triéthanolamine) des acides alkyl sulfonique, aryl sulfonique, alkyl aryl sulfonique et alkyl aryl polyéther sulfonique et les mélanges de ces sels.

L'agent tensioactif non ionique peut, pour sa part, être choisi parmi les alcools gras éthoxylés et les nonyl phénols éthoxylés, comportant de 7 à 20 moles d'oxyde d'éthylène, et leurs mélanges.

De préférence, l'agent tensioactif anionique est mis en oeuvre à raison de 3 à 10% (p/v) et, de même, l'agent tensioactif non ionique est mis en oeuvre à raison de 3 à 10% (p/v), ces pourcentages étant donnés par rapport au volume total du monoterpène, de l'herbicide chimique et du véhicule.

Par mise en oeuvre du système tensioactif ci-dessus, il est possible de former des solutions aqueuses stables contenant tous les ingrédients, dont les monoterpènes qui sont des molécules généralement volatiles ; sans ce système tensioactif particulier, les monoterpènes n'auraient qu'un faible effet dans le sol en raison de leur caractère volatil.

Pour prolonger l'action dans le sol des monoterpènes, le véhicule peut en outre contenir au moins un rétenteur de produit volatil. Conviennent à cet effet, par exemple les molécules du type acides gras saturés et insaturés et leurs dérivés tels que les esters ; on citera en particulier les acides et dérivés de la série en $C_{11}$, notamment l'acide undé-cylénique et ses esters comme les esters méthylique et éthylique.

La concentration des différents constituants mis en oeuvre selon l'invention peut varier dans de larges limites. Ainsi, par exemple, la concentration de l'herbicide chimique peut être de 6 à 60% (p/v) et de préférence de 30-60% (p/v), celle du monoterpène de 10 à 40% (p/v) et de préférence de 15 à 25% (p/v), celle du rétenteur de 6 à 20% (p/v) et de préférence de 5 à 15% (p/v) et celle des agents tensioactifs de 6 à 20% (p/v), le complément à 100% (p/v) étant de l'eau.

Par ailleurs, ces différents constituants se présentent avantageusement sous la forme d'un concentré à diluer à raison de 5 à 20‰ avec de l'eau.

L'application susvisée du procédé de lutte peut être réalisée notamment par pulvérisation sur les mauvaises herbes et le sol de préférence avant la culture.

Les exemples non limitatifs ci-après sont donnés aux fins d'illustration de la présente invention.

Exemple 1 : Préparation d'une solution concentrée émulsionnable de cinéole [composition (1)]

La composition (1) est obtenue par simple mélange des constituants suivants :

| | |
|---|---|
| - cinéole | 50,0 g |
| - tensioactif anionique (phénylsulfonate de calcium) | 3,0 g |
| - tensioactif non ionique (nonyl phénol éthoxylé à 10 moles d'oxyde d'éthylène) | 7,0 g |
| - undécylènate de méthyle | 32,2 g |
| | 92,2 g(100 ml) |

Exemple 2 : Préparation d'une composition herbicide selon l'invention comprenant le sel d'isopropylamine du glyphosate

On mélange 40 ml (36,8g) de la composition (1) préparée à l'exemple 1, avec les constituants suivants :

- solution aqueuse du sel d'isopropylamine du glyphosate, à 62% d'équivalent glyphosate     31 ml (42 g)
- eau     29 ml (29 g)

La composition herbicide résultante est une solution aqueuse émulsionnée contenant 200 g/l de cinéole et 260 g/l d'équivalent glyphosate (sous forme de son sel d'isopropylamine).

Exemple 3 : Préparation d'une composition herbicide selon l'invention comprenant le sel de potassium du glyphosate

On mélange 40 ml de la composition (1) préparée à l'exemple 1, avec les constituants suivants :

-   solution aqueuse de sel de potassium de glyphosate à 500 g/l d'équivalent glyphosate          40 ml
-   eau        20 ml

La composition résultante est une solution aqueuse émulsionnée contenant 200 g/l de cinéole et 200 g/l d'équivalent glyphosate (sous forme de son sel de potassium).

Exemple 4 : Préparation d'une composition herbicide selon l'invention comprenant le sel d'ammonium du glufosinate.

On mélange 40 ml de la composition (1) préparée à l'exemple 1, avec les constituants suivants.

-   sel d'ammonium du glufosinate        15 g
-   eau        39 ml

Exemple 5 : Préparation d'une composition herbicide selon l'invention comprenant le glyphosate triméthylsulfonium.

On mélange 40 ml de la composition (1) préparée à l'exemple 1, avec les constituants suivants :

-   glyphosate triméthylsulfonium        24 g
-   eau        40 ml

Toutes les compositions objet des exemples 2 à 5 forment des émulsions stables et peuvent être conditionnées dans des récipients en matière plastique, par exemple en polyéthylène.

Exemple 6 : Test d'évaluation d'efficacité biocide

Ce test est conduit à titre d'exemple sur la composition objet de l'exemple 2 ci-dessus.

Matériels et méthodes :

Plusieurs adventices ont été choisies pour leur nocivité particulière dans des cultures de vigne et arbres fruitiers selon la liste suivante :

> Amaranthus spinosus
> Poa annua
> Digitaria sanguinalis
> Setaria glauca
> Senecio vulgaris
> Geranium robertianum
> Erigeron canadensis
> Portulaca sp.
> Chenopodium sp.

Ce sont toutes des adventices annuelles appartenant aux deux grands groupes : dicotylédones et monocotylédones.
Le test est effectué en terrines remplies de terre et d'une surface de 0,3 m$^2$. Chaque terrine reçoit 50 graines d'une espèce et l'essai comporte 4 répétitions, soit 4 terrines par adventices.
La composition de l'exemple (2) est diluée dans l'eau à 7 et 14‰. A titre de comparaison, on utilise un herbicide de référence comprenant un aminophosphonate et une molécule chimique à activité résiduaire, à savoir une composition comprenant 250 g/l de glyphosate et 250 g/l de diuron, à la dilution de 5‰.
Il est à noter que la teneur en glyphosate de l'herbicide de référence est similaire à celle de la composition de l'invention.
Le traitement est effectué par un pulvérisateur à pression constante muni de buses calibrées permettant un épandage de 0,3 litre/m$^2$.
Les résultats sont lus en décomptant le nombre d'adventices qui ont germé et se sont developpées après 60

jours et en calculant l'efficacité selon la formule :

$$\frac{\Sigma x}{50} /4 \text{ pour cent}$$

où $\Sigma x$ est le nombre total d'adventices observé pour chaque espèce sur les 4 terrines semées pour chaque espèce.

Les résultats obtenus sont les suivants, exprimés en % d'efficacité :

| Produit | Composition de l'exemple 2 | | Herbicide de référence |
|---|---|---|---|
| Dilution | 7‰ | 14‰ | 5‰ |
| Amarantus sp | 7 | 70 | 68 |
| Poa sp. | 68 | 87 | 80 |
| Digitaria sp. | 35 | 55 | 47 |
| Setaria sp. | 62 | 89 | 93 |
| Senecio sp. | 77 | 99 | 85 |
| Geranium sp. | 20 | 40 | 20 |
| Erigeron sp. | 99 | 100 | 100 |
| Portulaca sp. | 23 | 72 | 96 |
| Chenopodium sp. | 64 | 90 | 94 |

De manière surprenante, on constate que l'efficacité dans le sol du produit de l'invention est tout à fait comparable à celle de l'herbicide de référence.

La teneur en aminophosphonate et la dose appliquée de ce dernier étant sans incidence sur l'action anti-germinative puisque celui-ci n'a pas d'action résiduaire en soi, on peut conclure que le cinéole tel que mis en oeuvre dans le produit et les procédés de la présente invention a la même efficacité que le diuron, herbicide à activité résiduaire standard et donc on peut avantageusement utiliser cette molécule en combinaison avec les aminophosphonates couramment utilisés en agriculture.

En fait, le cinéole en raison de son caractère très volatil n'a normalement qu'une faible activité anti-germinative.

Cependant, grâce à la mise en oeuvre du véhicule particulier selon l'invention, il est possible de stabiliser le cinéole au sein de la composition une fois absorbée dans le sol et, partant, de renforcer l'intensité et la durée de son activité anti-germinative au point que cette dernière soit comparable à celle d'herbicides résiduaires puissants comme le diuron.

**Revendications**

1. Produit de destruction des germes de mauvaises herbes, présents dans le sol, **caractérisé en ce qu'**il comprend au moins un monoterpène choisi dans le groupe constitué par le β-pinène, le géraniol, le citral, le cinéole, le linalool et le menthol.

2. Procédé de destruction des germes de mauvaises herbes, présents dans le sol, **caractérisé en ce qu'**il comprend le traitement du sol par au moins un monoterpène choisi dans le groupe constitué par le β-pinène, le géraniol, le citral, le cinéole, le linalool et le menthol.

3. Procédé de lutte contre les mauvaises herbes présentes sur un site et les germes de mauvaises plantes, présents dans le sol de ce site, comprenant l'application sur ces mauvaises herbes d'au moins un herbicide chimique à action systémique et inactivé au contact du sol, **caractérisé en ce qu'**il comprend en outre l'application sur le sol de ce site du produit de destruction de germes selon la revendication 1.

4. Procédé selon la revendication 3, **caractérisé en ce que** ledit herbicide chimique est un aminophosphonate.

5. Procédé selon la revendication 4, **caractérisé en ce que en ce que** l'aminophosphonate est choisi dans le groupe constitué par l'acide 2-amino 4-(hydroxyméthylphosphinyl) butanoïque, le sel d'ammonium de cet acide, la N-(phosphonométhyl) glycine et les sels d'amine, de métal alcalin, d'ammonium et de triméthylsulfonium de la N-(phosphonométhyl) glycine.

**6.** Procédé selon l'une quelconque des revendications 3 à 5, **caractérisé en ce que** l'herbicide chimique est constitué par le sel d'ammonium de l'acide 2-amino 4-(hydroxyméthylphosphinyl) butanoïque et/ou du sel d'isopropylamine de la N-(phosphonométhyl) glycine et **en ce que** le produit de destruction de germes est constitué par le cinéole.

**7.** Procédé selon l'une quelconque des revendications 3 à 6, **caractérisé en ce que** l'herbicide chimique est utilisé conjointement avec un véhicule comprenant au moins un agent tensioactif anionique et au moins un agent tensioactif non-ionique.

**8.** Procédé selon la revendication 7, **caractérisé en ce que** ledit agent tensioactif anionique est choisi parmi les sels d'acides alkyl sulfonique, aryl sulfonique, alkyl aryl sulfonique et alkyl aryl polyéther sulfonique et les mélanges de ces sels.

**9.** Procédé selon l'une quelconque des revendications 6 et 8, **caractérisé en ce que** ledit agent tensioactif non-ionique est choisi parmi les alcools gras éthoxylés et les nonyl phénols éthoxylés, comprenant de 7 à 20 moles d'oxyde d'éthylène, et leurs mélanges.

**10.** Procédé selon l'une quelconque des revendications 6 à 9, **caractérisé en ce que** ledit véhicule contient en outre au moins un rétenteur de produit volatil.

**11.** Procédé selon la revendication 10, **caractérisé en ce que** ledit rétenteur est choisi dans le groupe constitué par l'acide undécylénique, l'éther méthylique de cet acide, l'éther éthylique de cet acide.

**Patentansprüche**

**1.** Produkt zur Zerstörung von Keimen von Unkräutern, die im Boden vorhanden sind, **dadurch gekennzeichnet, dass** es mindestens ein Monoterpen umfasst, das ausgewählt ist aus der Gruppe bestehend aus β-Pinen, Geraniol, Citral, Cineol, Linalool und Menthol.

**2.** Verfahren zur Zerstörung von Keimen von Unkräutern, die im Boden vorhanden sind, **dadurch gekennzeichnet, dass** es die Behandlung des Bodens mit mindestens einem Monoterpen umfasst, das ausgewählt ist aus der Gruppe bestehend aus β-Pinen, Geraniol, Citral, Cineol, Linalool und Menthol.

**3.** Verfahren zum Bekämpfen der Unkräuter, die an einem Ort vorhanden sind, und der Keime von Unkrautpflanzen, die im Boden dieses Ortes vorhanden sind, umfassend die Anwendung von mindestens einem chemischen Herbizid, das eine systemische Wirkung aufweist und beim Kontakt mit dem Boden inaktiviert wird, auf die Unkräuter, **dadurch gekennzeichnet, dass** es außerdem die Anwendung des Produkts zur Zerstörung von Keimen nach Anspruch 1 auf den Boden dieses Ortes umfasst.

**4.** Verfahren nach Anspruch 3, **dadurch gekennzeichnet, dass** das chemische Herbizid ein Aminophosphonat ist.

**5.** Verfahren nach Anspruch 4, **dadurch gekennzeichnet, dass** das Aminophosphonat ausgewählt ist aus der Gruppe bestehend aus 2-Amino-4-(hydroxymethylphosphinyl)-butansäure, dem Ammoniumsalz dieser Säure, N-(Phosphonomethyl)glycin und den Amin-, Alkalimetall-, Ammonium- und Trimethylsulfoniumsalzen von N-(Phosphonomethyl)glycin.

**6.** Verfahren nach einem der Ansprüche 3 bis 5, **dadurch gekennzeichnet, dass** das chemische Herbizid aus dem Ammoniumsalz von 2-Amino-4-(hydroxymethylphosphinyl)butansäure und/oder dem Isopropylaminsalz von N-(Phosphonomethyl)glycin besteht und dass das Produkt zur Zerstörung von Keimen aus Cineol besteht.

**7.** Verfahren nach einem der Ansprüche 3 bis 6, **dadurch gekennzeichnet, dass** das chemische Herbizid zusammen mit einem Vehikel verwendet wird, das mindestens eine anionische oberflächenaktive Substanz und mindestens eine nicht-ionische oberflächenaktive Substanz umfasst.

8. Verfahren nach Anspruch 7, **dadurch gekennzeichnet, dass** die anionische oberflächenaktive Substanz ausgewählt ist aus den Salzen von Alkylsulfonsäuren, Arylsulfonsäuren, Alkylarylsulfonsäuren und Alkylarylpolyethersulfonsäuren und den Gemischen von diesen Salzen.

9. Verfahren nach einem der Ansprüche 6 und 8, **dadurch gekennzeichnet, dass** die nicht-ionische oberflächenaktive Substanz ausgewählt ist aus den ethoxylierten Fettalkoholen und den ethoxylierten Nonylphenolen, die 7 bis 20 Mol Ethylenoxid umfassen, und ihren Gemischen.

10. Verfahren nach einem der Ansprüche 6 bis 9, **dadurch gekennzeichnet, dass** das Vehikel außerdem mindestens eine Verbindung enthält, die ein flüchtiges Produkt festhält.

11. Verfahren nach Anspruch 10, **dadurch gekennzeichnet, dass** die Verbindung, die ein flüchtiges Produkt festhält, ausgewählt ist aus der Gruppe bestehend aus Undecylensäure, dem Methylether dieser Säure und dem Ethylether dieser Säure.

## Claims

1. Product for destroying the germs of weeds, present in the soil, **characterised in that** it includes at least one monoterpene, chosen from the group constituted by β-pinene, geraniol, citral, cineole, linalool and menthol.

2. Process for destroying the germs of weeds, present in the soil, **characterised in that** includes treating the soil with at least one monoterpene chosen from the group constituted by β-pinene, geraniol, citral, cineole, linalool and menthol.

3. Process for combating weeds present on a site and the germs of weeds, present in the soil of said site, including the application to said weeds of at least one chemical herbicide having a systemic action and which is inactivated in contact with the soil, **characterised in that** it further includes applying to the soil of said site the germ destruction product according to claim 1.

4. Process according to claim 3, **characterised in that** said chemical herbicide is an aminophosphonate.

5. Process according to claim 4, **characterised in that** the aminophosphonate is chosen from the group constituted by 2-amino 4-(hydroxymethylphosphinyl) butanoic acid, the ammonium salt of this acid, N-(phosphonomethyl) glycine and the salts of amine, of alkali metal, of ammonium and of trimethylsulfonium of N-(phosphonomethyl) glycine.

6. Process according to any one of claims 3 to 5, **characterised in that** the chemical herbicide is constituted by the ammonium salt of 2-amino 4-(hydroxymethylphosphinyl) butanoic acid and/or the isopropylamine salt of N-(phosphonomethyl) glycine, and **in that** the germ destroying product is constituted by cineole.

7. Process according to any one of claims 3 to 6, **characterised in that** the chemical herbicide is used in conjunction with a vehicle including at least one anionic surfactant and at least one non-ionic surfactant.

8. Process according to claim 7, **characterised in that** said anionic surfactant is chosen among the salts of alkyl sulphonic, aryl sulphonic, alkyl aryl sulphonic and alkyl aryl polyether sulphonic acids and the mixtures of these salts.

9. Process according to any one of claims 6 and 8, **characterised in that** said non-ionic surfactant is chosen among the ethoxylated fatty alcohols and the ethoxylated nonylphenols, including from 7 to 20 moles of ethylene oxide, and mixtures thereof.

10. Process according to any one of claims 6 to 9, **characterised in that** said vehicle further contains at least one volatile product retentive agent.

11. Process according to claim 10, **characterised in that** said retentive agent is chosen from the group constituted by undecylenic acid, the methyl ether of this acid and the ethyl ether of this acid.